# EUROPEAN PATENT SPECIFICATION

(11) **EP 0 342 027 B1**
(45) Date of publication and mention of the grant of the patent: **24.01.1996**
(21) Application number: 89304770.4
(22) Date of filing: 11.05.1989
(51) Int. Cl.: C08G 59/50

(54) **Epoxy-aromatic polysiloxane compositions**
Zusammensetzungen aus Epoxiden und aromatischen Polysiloxanen
Compositions d'époxides et polysiloxanes aromatiques

(30) Priority: 13.05.1988 US 194059
(43) Date of publication of application: 15.11.1989
(73) Proprietor: NATIONAL STARCH AND CHEMICAL INVESTMENT HOLDING CORPORATION, Wilmington, Delaware 19801 (US)
(72) Inventor: Edelman, Robert, Staten Island New York 10310 (US)
(74) Representative: Paget, Hugh Charles Edward

(56) References cited:
- DE-A- 2 312 525
- US-A- 3 247 280
- US-A- 3 516 964
- US-A- 3 655 420

## Description

This invention relates to curable compositions comprising mixtures of epoxy resins and polysiloxanes, and is particularly concerned with such compositions curable to a material having a high glass transition temperature (Tg).

An extensive body of prior art exists disclosing the use of a myriad of cured epoxy systems in coatings, composite matrices, casting resins, adhesives and the like; see e.g. Encyclopedia of Polymer Science and Technology, Vol. 6, pages 209-271 (Interscience Publishers, NYC, 1967).

Copolymers of the diglycidyl ether of bisphenol A and aminopropyl-terminated aliphatic siloxane oligomers were demonstrated by J.L. Hedrick and co-workers to have a two-phase morphology ["Synthesis and Properties of Segmented Poly(hydroxyether-siloxane Copolymers", Polymer Preprints, Vol. 27, No. 2, National ACS Meeting, Anaheim, CA., 203 (1986)]. The maximum Tg observed in this study was 27°C.

As the use of epoxy resins is extended, more stringent physical property requirements arise with each new application. One new demanding application for epoxy resins is a coating or adhesive for composite materials resistant to atomic oxygen attack in an outer space environment. In addition, this application requires the material to withstand severe thermal cycling (-70°C to +70°C) over extended periods of time.

It has been shown that some silicone-containing materials have improved resistance to atomic oxygen (Advanced Composites, Nov/Dec,page 33, 1986).

US-A-3516 964 describes curable epoxy resin compositions, and cured products obtained therefrom, which comprise an aromatic diaminopolysiloxane and a siloxane group containing triepoxide.

Thus, one problem addressed by the invention is that of providing an epoxy resin composition curable to a material having a high Tg, and particularly a Tg of over 90°C, preferably 100°C or more. As far as we are aware no epoxy/silicone system has previously been reported achieving such a Tg.

Preferably, it would be desirable to provide siloxane-based epoxy adhesives which may have improved resistance to attack by atomic oxygen.

Enhanced impact strength and moisture resistance of the cured composition are also preferred properties.

Accordingly, the present invention provides a composition comprising a multifunctional glycidyl ether as specified below having at least three epoxy groups, i.e.: 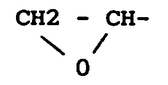 per molecule, and optionally a diglycidyl ether, together with a hardening amount of a mixture of an aromatic diaminopolysiloxane as specified below and optionally a rigid aromatic diamine. The glycidyl ether must be compatible and therefore should not be a glycidylamine.

The structure of the multifunctional glycidyl ethers is important. They are polyglycidyl ethers of polyhydric mononuclear or polynuclear phenols, or epoxidized novolak resins. Epoxy resins with this structure were found to be compatible with the aromatic diaminopolysiloxane-rigid aromatic diamine mixtures while multifunctional glycidyl compounds containing nitrogen, such as N,N,N',N'-tetraglycidylmethylenedianiline (Araldite MY-720 Ciba-Geigy Corp.) were found not to be compatible with the aromatic siloxane diamines. This was evidenced by separation shortly after mixing. This result was unexpected and is unexplained. Both types of multifunctional glycidyl, compounds described are highly polar materials and it was unexpected that they would show significantly different levels of compatibility with a hydrophobic siloxane-containing amine. Nitrogen-containing epoxides are commonly referred to as glycidylamines.

The aromatic diaminopolysiloxane is represented by the generic formula : 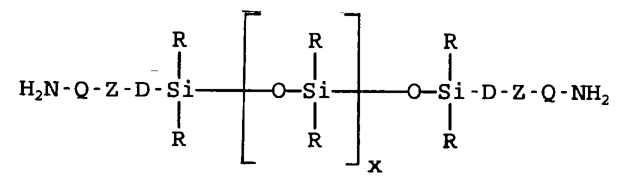 wherein Q is a substituted or unsubstituted aromatic group;
Z is -O-, -S-, -SO₂-, -SO₂NH-, -NHSO₂-, 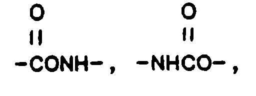 -C(O)O-, or -OC(O)-;
D is a substituted or unsubstituted hydrocarbylene;
and R is substituted or unsubstituted hydrocarbyl; and
x is a number from 0 to 100.

The amount by weight diaminopolysiloxane in the mixture of diaminopolysiloxane and rigid aromatic diamine is 50% to 100% and the amount by weight of rigid aromatic diamine is from 50% to 0%. The mixture of diaminopolysiloxane and rigid aromatic diamine may. range from 50 to 100 parts by weight per hundred parts by weight of glycidyl ether resin.

While it is essential to use a significant amount of a multifunctional glycidyl ether having at least three epoxy groups per molecule in the compositions of this invention, one may also have present an epoxy resin having 2 epoxy groups per molecule,such as the diglycidyl ether of bisphenol A (DGEBA).

When a mixture of multifunctional glycidyl ethers is used, one can preferably use 20 to 50 parts of difunctional resin to 50 to 80 parts of multifunctional resin.

The aromatic diaminopolysiloxanes may be prepared by methods known in the art. For suitable examples, refer to GB-A-1, 062, 418 and US-A-4395,527.
where the reactionsof the sodium salt of a phenol or naphthol with a gamma-haloalkyl silane are disclosed. Yields of at least 85% can be achieved when a compound of the formula:

F'-Q-Z-M

where F'= H or halogen, M = alkali or alkaline earth metal and Q and Z are as defined above, is reacted with a bis (halohydrocarbyl) disiloxane having the formula:

X-D-R SiR -O-R SiR -D-X

where X is halogen and R and D are as defined above, at ambient temperature and pressure in the presence of a dipolar aprotic solvent, as for example, dimethyl sulfoxide, N,N-dimethylformamide, tetramethylurea, N-methyl-2-pyrrolidone or hexamethylphosphoramide.

A preferred diaminopolysiloxane is bis(m-aminophenoxybutyl)hexadecamethyloctasiloxane.

Typical of the multifunctional glycidyl ethers which may be used are the polyglycidyl ethers of novolac resins and mono and polynuclear phenols having a minimum of three epoxy groups, i.e., 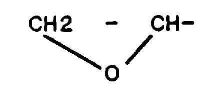 per molecule. Among the suitable di- and polynuclear phenols suitable for preparation of polyglycidyl ethers are the bisphenols described by Bender et al. in US-A- 2,506,486 and polyphenols such as the novolac condensation product of a phenol and a saturated or unsaturated aldehyde containing on an average of from 3 to 20 or more phenylol groups per molecule (cf. book by T.S. Carswellmntitled "Phenoplasts," published in 1947 by Interscience Publishers of New York). Examples of suitable polyphenols derived from a phenol and an unsaturated aldehyde such as acrolein, are the triphenylol, pentaphenylols and heptaphenylols described in US-A-2,801,989, and US-A-2,885,385 both by A. G. Farnham.

Generally, these polyglycidyl. ethers of polyhydric phenols are prepared by the reaction of an epihalohydrin with a polyhydric phenol under basic conditions. The polyhydric phenol can be mononuclear such as resorcinol, catechol, methyl resorcinol or hydroquinone, or may be di- or polynuclear.

The polyhydric polynuclear phenols can consist of two or more phenols connected by such groups as alkylidene, alkylene, ether, ketone or sulfone. The connecting groups are further exemplified by the following compounds.: bis(p-hydroxyphenyl)ether, )ether, bis(p-hydroxyphenyl)ketone, bis(p-hydroxyphenyl)methane, )methane, bis(p-hydroxyphenyl)dimethylmethane, bis(p-hydroxyphenyl)benzophenone, l,5-dihydroxynaphthalene, bis(p-hydroxyphenyl)sulfone or a trisphenol or a tetraphenol.

Preferred as the epihalohydrin for reaction with the above polyhydric phenols are epichlorohydrin, glycerol dichlorohydrin, 3-chloro-1,2-epoxy butane, 3-bromo-1,2-epoxy hexane, and 3-chloro-1,2-epoxy octane.

Other polyepoxides such as bis(2,3-epoxycyclopentyl) ether, 3,4-epoxy-6-methylcyclohexylmethyl, 3,4-epoxy-6-methylcyclohexanecarboxylate, vinyl cyclohexene dioxide and dicyclopentadiene dioxide can also be used.

Novolac resins are prepared by the condensation of phenol with an aldehyde, or more generally, by the reaction of a phenolic compound, having two or three reactive aromatic ring hydrogen positions, with an aldehyde or aldehyde-liberating compound capable of undergoing phenol-aldehyde condensation.

Illustrative of phenolic compounds are cresol, xylenol, ethylphenol, butylphenol, isopropylmethoxyphenol, chlorophenol, resorcinol, hydroquinone, naphthol and 2,2-bis(p-hydroxyphenol) propane. Illustrative of aldehydes are formaldehyde, acetaldehyde, acrolein, crotonaldehyde and furfural. Illustrative of aldehyde-liberating compounds are for, example, paraformaldehyde, formalin and 1,3-5-trioxane. Ketones such as acetone are also capable of condensing with the phenolic compounds, as are methylene engendering agents such as hexamethylenetetramine.

The condensation reaction is conducted in the presence of an acidic catalyst using less than six moles of aldehyde per seven moles of phenol. The novolac resins thus produced are permanently fusible and soluble. When the condensation reaction is completed, if desired, the water and other volatile materials can be removed by distillation and the catalyst neutralized.

In a typical synthesis, novolacs are prepared by heating one mole of phenol with 0.8 mole of an aldehyde under acidic conditions. The temperature at which the reaction is conducted is generally from about 25°C to about 175°C.

The epoxidized novolac resins used in this invention can be prepared by the epoxidation of the novolac by methods well known in the art, as for example, by reaction with an epihalohydrin as described in Epoxy Resins by H. Lee and K. Neville, McGraw Hill Book Co., page 195, N.Y.C.

. The term "rigid aromatic amine" is used herein to mean preferably those amines that have the following structure: 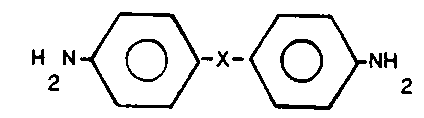 where

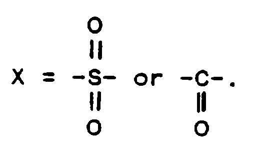

The aromatic amines having the structure shown above impart "latency" to the formulations containing them thus providing a longer pot life.

Other types of rigid aromatic amines not having the structure above, such as, m and p-phenylenediamine, 4,4'-methylenedianiline, 1,3-diaminocyclohexane, 1,4-diaminocyclohexane, menthanediamine, 2,7-diaminonaphthalene, 3,7-diaminonaphthalene, benzidine, 3,3'-dimethylbenzidine, 3,3'-dimethoxybenzidine, m-xylenediamine, p-xylenediamine and the like can be used but they are not as favored because of the short pot life of the compositions obtained when they are mixed with epoxy resins.

The term "compatible composition" is used herein to mean compositions whose components are dispersed with one another and do not separate during the life of the product. These compositions exist as a plurality of phases and exhibit more than one glass transition temperature.

The preferred rigid aromatic amine is 3,3'-diaminodiphenylsulfone although others, such as , 4,4'-diaminodiphenylsulfone, 4,4'-diaminodiphenylketone and 3,3'-diaminodiphenylketone can also be used.

To demonstrate the invention a series of experiments was conducted in which TACTIX 742, a glycidyl ether of triphenylolmethane was used at varying levels by weight with ARALDITE 6010, a diglycidyl ether of bisphenol A.

The invention is further described in the examples which follow. All parts and percentages are by weight unless otherwise specified.

### EXAMPLE 1

As a general procedure, the epoxy resins were combined first followed by the addition of rigid aromatic diamine and finally by the addition of aromatic diaminopolysiloxane. The combined materials (not yet mixed) were placed in a circulating air oven at 110-150°C for 5-15 minutes. They were then removed and mixed while hot. Additional brief heating (i.e. up to about 5 minutes) can be used to remove entrapped air. If any undissolved particulates remain in the mixture, they are removed by passing through a coarse filter. The mixture can be cured immediately or stored and cured at a later date. The pot life of these compositions varied from 4 to 6 days depending on the particular ratio of components in the formulation. Pot life was determined by allowing a 20 gram mass to stand in a beaker at room temperature until tack was completely gone. The pot life can be extended by freezing the composition.

In a specific example the following ingredients were added to a beaker:
12g of TACTIX 742 epoxy resin (a trademark of Dow Chemical Co. for a triglycidyl ether of triphenylolmethane)
12 g of ARALDITE 6010 epoxy resin (a trademark of Ciba-Geigy Chemical Co.for a bisphenol A diglycidyl ether);
1.5 g of 4,4'-diaminodiphenylsulfone; and
16.0 g of bis(m-aminophenoxybutyl)hexadecamethyloctasiloxane. The beaker was placed in a circulating air oven at a temperature of 150°C for about 5-10 minutes. The ingredients were mixed thoroughly and filtered. A clear homogeneous system was obtained that remained that way on standing (one of the indicia of compatibility) was cured at 150°C for one hour and at 170 °C for two hours. A light brown clear plaque was formed. The Tg of this product was 100°C when measured by the Differential Scanning Calorimeter method (DSC). A dynamic thermogravimetric analysis (TGA) was run in air. The initial weight loss was observed at 275°C. A 10% weight loss was observed at 370°C.

The pot life of 25 g of the uncured mixture of ingredients delineated above was determined by allowing it to stand at room temperature. After 4 days, gelation was observed.

### EXAMPLE 2

Using the procedure of Example 1, the following ingredients were added to a beaker:
12 g of TACTIX 742;
8 g of ARALDITE 6010;
4 g of 4,4'-diaminodiphenylsulfone; and
6.4 g of bis(m-aminophenoxybutyl)hexadecamethyloctasiloxane. The ingredients were heated in a circulating air oven at 150°C for 10-15 minutes. The cloudy mixture was filtered and cured as in Example 1. A light brown clear plaque was formed. The Tg (DSC) of this product was 120°C. Pot life was determined as in Example 1. Gelation was observed after 6 days.

### EXAMPLE 3

Example 1 was repeated using:
60parts of TACTIX 742,
40 parts of ARALDITE 6010,
8.4 parts of 4,4'-diaminodiphenylsulfone; and
91.6 parts of bis(m-aminophenoxybutyl)hexadecamethyloctasiloxane.

The cured product showed a Tg of 100°C and a pot life of 4 days.

### EXAMPLE 4

Example 1 was repeated using:
60 parts of TACTIX 742,
40 parts of ARALDITE 6010,
21.4 parts of 4,4'-diaminodiphenylsulfone; and
78.6 parts of bis(m-aminophenoxybutyl)hexadecamethyloctasiloxane.

The cured product showed a Tg of 107°C and a pot life of 5-6 days.

### EXAMPLE 5

Example 1 was repeated using:
60parts of TACTIX 742,
40 parts of ARALDITE 6010
38.8 parts of 4,4'-diaminodiphenylsulfone; and
61.2 parts of bis(m-aminophenoxybutyl)hexadecamethyloctasiloxane.

The cured product showed a Tg of 120°C and a pot life of 5-6 days.

### Example 6

Example 1 was repeated using:
70parts of TACTIX 742,
30 parts of ARALDITE 6010
7.3 parts of 4,4'-diaminodiphenylsulfone; and
92.7 parts of bis(m-aminophenoxybutyl)hexadecamethyloctasiloxane.

The cured product showed a Tg of 101°C and a pot life of 4 days.

### EXAMPLE 7

When Example 1 is repeated with the exception that no diglycidyl ether is included in the composition, a cured product with a comparable Tg and pot life is obtained.

The compositions described in the preceding examples are useful as coatings, adhesives and potting compounds.

### CONTROL

ARALDITE MY-720 epoxy resin (26.4g) was added to a beaker and heated to about 100°c. ARALDITE MY-720 is a Ciba Chemical Co. trademark for N,N'-tetraglycidylmethylenedianiline. The curing agent, 4,4'-diaminodiphenylsulfone (3.7g) was melted in a beaker on a hot plate. This material was added in liquid form to the heated epoxy resin. Nineteen grams of bis(m-aminophenoxybutyl)hexadecamethyloctasiloxane were then added to the mixture. The mixture was thoroughly mixed to an opaque paste. Extended heating at 150°C resulted in separation of the bis(m-amihophenoxybutyl)hexadecamethyloctasiloxane to form a clearly defined layer on the top of the mixture.

The Control is clear evidence of the incompatibility of tetraglycidylamine resin with a mixture of rigid aromatic diamine and aromatic diaminopolysiloxane.

If it is desired, one may add to the mixture one or more fillers, pigments, accelerators, thixotropic agents and the like. Exemplary fillers include mica, inorganic carbonates or sulfates, clays, diatomaceous earth and the like. Representative pigments include titanium dioxide, cadmium reds, chrome oranges, chrome yellows, phthalocyanine blues and greens and the like. A preferred blue pigment is BASF Heliogen blue K6911D. Trifunctional amines, such as, tribenzylamine are preferred accelerators. Aerosil and silica are preferred thixotropic agents.

## Claims

1. A composition which is a mixture of components (a) and (b) as follows:
(a) a diamino component, consisting of
(i) an aromatic diaminopolysiloxane of the formula: 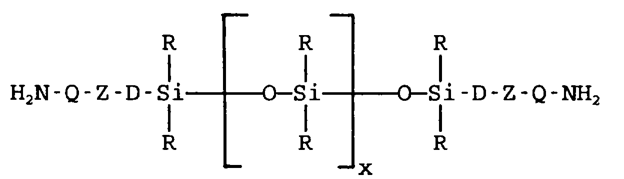 wherein:
Q is a substituted or unsubstituted aromatic group;
Z is -O-, -S-, -SO₂-,SO₂NH-, -NHSO₂-, 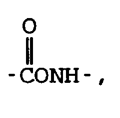 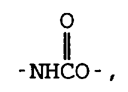 -C(O)O-, or -OC(O)-;
D is substituted or unsubstituted hydrocarbylene and
R is substituted or unsubstituted hydrocarbyl; and
(ii) optionally, a rigid aromatic diamine up to the same amount by weight as (a) (i);
(b) a glycidyl ether component consisting of
(i) a multifunctional glycidyl ether having three or more epoxy groups per molecule, being a polyglycidyl ether of a polyhydric mononuclear or polynuclear phenol, or an epoxidised novolak resin, and
(ii) optionally, a diglycidyl ether, not being a glycidylamine, up to the same amount by weight as (b) (i);
wherein the composition contains 50 to 100 parts of (a) to 100 parts of (b) by weight, is a compatible mixture without phase separation of (a) and (b), and
wherein in the aromatic diaminopolysiloxane x is a number from 0 to 100, provided that the mixture of the aromatic diaminopolysiloxane with N,N,N',N'-tetraglycidylmethylene dianiline substituted for component (b) is incompatible, and provided also that the composition is curable to a cured composition having a glass transition temperature (Tg) over 90°C.

2. A composition according to claim 1 which is curable to have a Tg of at least 100°C.

3. A composition according to claim 1 or claim 2 in which the rigid aromatic diamine is present.

4. A composition according to claim 3 in which the rigid aromatic diamine is a diaminoarylsulphone or a diaminoarylketone.

5. A composition according to claim 4 in which the rigid aromatic diamine is 4,4'diaminodiphenylsulphone, 3,3'-diaminodiphenylsulphone or 4,4'diaminodiphenylketone.

6. A composition according to any one of claims 1 to 5 in which the multifunctional glycidyl ether is an epoxidised novolac.

7. A composition according to any one of claims 1 to 5 in which the multifunctional glycidyl ether is a triglycidyl ether of triphenylolmethane.

8. A composition according to any one of the preceding claims in which the diglycidyl ether is present.

9. A composition according to claim 8 in which the diglycidyl ether is diglycidyl ether of bisphenol A.

10. A composition according to claim 8 or claim 9 in which the ratio of multifunctional glycidyl ether to diglycidyl ether is from 50:50 to 80:20.

11. A composition according to any one of the preceding claims in which, in the aromatic diaminopolysiloxane, Q is phenylene.

12. A composition according to any one of the preceding claims in which, in the aromatic diaminopolysiloxane, Z is -O-.

13. A composition according to any one of the preceding claims in which, in the aromatic diaminopolysiloxane, D has 4 carbon atoms.

14. A composition according to any one of claims 1 to 10 in which the aromatic diaminopolysiloxane is bis(m-aminophenoxybutyl)hexadecamethyloctasiloxane.

15. A method of making a curable composition, comprising mixing components (a) and (b) as defined in any one of claims 1 to 14.

16. A method according to claim 15 in which firstly component (b) is prepared, then (a)(ii) (where present) and (a)(i) are added in that order, and the combined components are heated and then mixed.

17. A cured composition obtainable by curing a composition according to any one of claims 1 to 14.

18. A method of obtaining an article having Tg of at least 90°C, comprising curing a composition according to any one of claims 1 to 14.

## Patentansprüche

1. Zusammensetzung, die ein Gemisch aus den Komponenten (a) und (b) ist, wie folgt:
(a) einer Diamino-Komponente, bestehend aus
(i) einem aromatischen Diaminopolysiloxan der Formel: 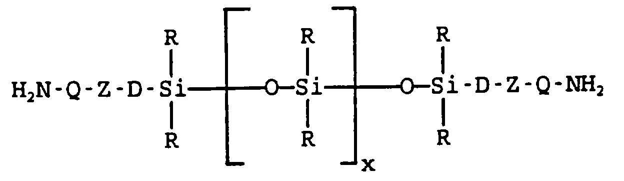 worin:
Q eine substituierte oder unsubstituierte aromatische Gruppe ist; Z = -O-, -S-, -SO₂-,SO₂NH-, -NHSO₂-, 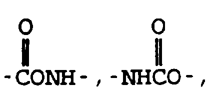 -(CO)O- oder -OC(O)- ist;
D ein substituierter oder unsubstituierter, zweiwertiger Kohlenwasserstoff-Rest ("hydrocarbylen") ist und
R ein substituierter oder unsubstituierter, einwertiger Kohlenwasserstoff-Rest ("hydrocarbyl") ist; und
(ii) gegebenenfalls einem starren aromatischen Diamin bis zur gleichen Gewichtsmenge wie (a)(i);
(b) einer Glycidylether-Komponente, bestehend aus
(i) einem multifunktionalen Glycidylether mit drei oder mehr Epoxygruppen pro Molekül, der ein Polyglycidylether eines mehrwertigen, ein- oder mehrkernigen Phenols ist, oder einem epoxidierten Novolakharz, und
(ii) gegebenenfalls einem Diglycidylether, der kein Glycidylamin ist, bis zur gleichen Gewichtsmenge wie (b)(i);
worin die Zusammensetzung 50 bis 100 Gewichtsteile von (a) auf 100 Gewichtsteile von (b) enthält, ein verträgliches Gemisch ohne Phasentrennung von (a) und (b) ist und
worin im aromatischen Diaminopolysiloxan x eine Zahl von 0 bis 100 ist, mit der Maßgabe, daß das Gemisch des aromatischen Diaminopolysiloxans mit N,N,N',N'-Tetraglycidylmethylendianilin als Komponente (b) unverträglich ist, und auch unter der Maßgabe, daß die Zusammensetzung zu einer gehärteten Zusammensetzung mit einer Glastemperatur (Tg) von über 90°C härtbar ist.

2. Zusammensetzung nach Anspruch 1, die so härtbar ist, daß sie eine Tg von zumindest 100°C aufweist.

3. Zusammensetzung nach Anspruch 1 oder 2, in der das starre aromatische Diamin vorhanden ist.

4. Zusammensetzung nach Anspruch 3, in der das starre aromatische Diamin ein Diaminoarylsulfon oder ein Diaminoarylketon ist.

5. Zusammensetzung nach Anspruch 4, in der das starre aromatische Diamin 4,4'-Diaminodiphenylsulfon, 3,3'-Diaminodiphenylsulfon oder 4,4'-Diaminodiphenylketon ist.

6. Zusammensetzung nach einem der Ansprüche 1 bis 5, in der der multifunktionale Glycidylether ein epoxidierter Novolak ist.

7. Zusammensetzung nach einem der Ansprüche 1 bis 5, in der der multifunktionale Glycidylether ein Triglycidylether von Triphenylolmethan ist.

8. Zusammensetzung nach einem der vorhergehenden Ansprüche, in der der Diglycidylether vorhanden ist.

9. Zusammensetzung nach Anspruch 8, in der der Diglycidylether der Diglycidylether von Bisphenol A ist.

10. Zusammensetzung nach Anspruch 8 oder 9, in der das Verhältnis zwischen multifunktionalem Glycidylether und Diglycidylether von 50:50 bis 80:20 beträgt.

11. Zusammensetzung nach einem der vorhergehenden Ansprüche, in der im aromatischen Diaminopolysiloxan Q = Phenylen ist.

12. Zusammensetzung nach einem der vorhergehenden Ansprüche, in der im aromatischen Diaminopolysiloxan Z = -O- ist.

13. Zusammensetzung nach einem der vorhergehenden Ansprüche, in der D im aromatischen Diaminopolysiloxan 4 Kohlenstoffatome aufweist.

14. Zusammensetzung nach einem der Ansprüche 1 bis 10, in der das aromatische Diaminopolysiloxan Bis-(m-aminophenoxybutyl)hexadecamethyloctasiloxan ist.

15. Verfahren zur Herstellung einer härtbaren Zusammensetzung, umfassend das Vermischen der Komponenten (a) und (b), wie nach einem der Ansprüche 1 bis 14 definiert.

16. Verfahren nach Anspruch 15, bei dem zuerst Komponente (b) hergestellt, dann (a)(ii) (falls vorhanden) und (a)(i) in dieser Reihenfolge zugegeben und die vereinigten Komponenten erwärmt und dann vermischt werden.

17. Gehärtete Zusammensetzung, die durch Härten einer Zusammensetzung nach einem der Ansprüche 1 bis 14 erhältlich ist.

18. Verfahren zum Erhalten eines Gegenstands mit einer Tg von zumindest 90°C, umfassend das Härten einer Zusammensetzung nach einem der Ansprüche 1 bis 14.

## Revendications

1. Composition qui est un mélange des composants (a) et (b) comme suit :
(a) un composant diamino consistant en
(i) un diaminopolysiloxane aromatique de la formule : 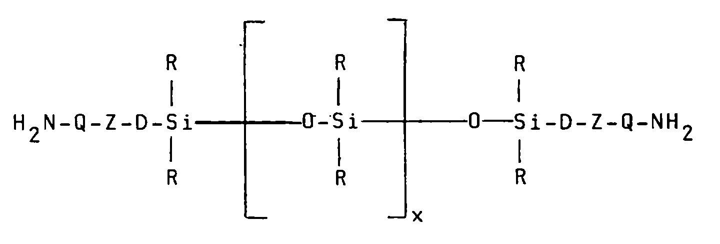 où :
Q est un groupe aromatique substitué ou non substitué ;
Z est -O-, -S-, -SO₂-, SO₂NH, -NHSO₂-, 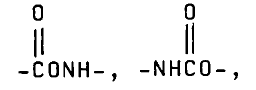 -C(O)O-, ou -OC(O)-;
D est hydrocarbylène substitué ou non substitué et
R est hydrocarbyle substitué ou non substitué ;
(ii) facultativement, une diamine rigide aromatique jusqu'à la même quantité en poids que (a) (i) ;
(b) un composant de glycidyl éther consistant en
(i) un glycidyl éther multifonctionnel ayant trois groupes époxy ou plus par molécule, qui est un polyglycidyl éther d'un phénol polyhydrique mononucléaire ou polynucléaire, ou bien une résine novolaque époxydée, et
(ii) facultativement, un diglycidyl éther qui n'est pas une glycidylamine, jusqu'à la même quantité en poids que (b) (i) ;
où la composition contient 50 à 100 parties de (a) pour 100 parties de (b) en poids, est un mélange compatible sans séparation des phases de (a) et (b), et
où, dans le diaminopolysiloxane aromatique x est un nombre compris entre 0 et 100, à condition que le mélange du diaminopolysiloxane aromatique avec la N,N,N',N'-tétraglycidylméthylène dianiline substituée pour le composant (b) soit incompatible et à condition également que la composition soit durcissable en une composition durcie ayant une température de transition vitreuse (Tg) au-delà de 90°C.

2. Composition selon la revendication 1, qui est durcissable pour avoir une Tg d'au moins 100°C.

3. Composition selon la revendication 1 ou la revendication 2 où la diamine rigide aromatique est présente.

4. Composition selon la revendication 3, où la diamine rigide aromatique est une diaminoarylsulfone ou une diaminoarylcétone.

5. Composition selon la revendication 4, où la diamine rigide aromatique est la 4,4'-diaminodiphénylsulfone, la 3,3'-diaminodiphénylsulfone ou la 4,4'-diaminodiphénylcétone.

6. Composition selon l'une quelconque des revendications 1 à 5, où le glycidyl éther multifonctionnel est une novolaque époxydée.

7. Composition selon l'une quelconque des revendications 1 à 5, où le glycidyl éther multifonctionnel est un triglycidyl éther ou un triphénylolméthane.

8. Composition selon l'une quelconque des revendications précédentes, où le diglycidyl éther est présent.

9. Composition selon la revendication 8, où le diglycidyl éther est le diglycidyl éther du bisphénol A.

10. Composition selon la revendication 8 ou la revendication 9, où le rapport du glycidyl éther multifonctionnel au diglycidyl éther est compris entre 50:50 à 80:20.

11. Composition selon l'une quelconque des revendications précédentes où, dans le diaminopolysiloxane aromatique, Q est phénylène.

12. Composition selon l'une quelconque des revendications précédentes, où le diaminopolysiloxane aromatique, Z, est -O-.

13. Composition selon l'une quelconque des revendications précédentes où, dans le diaminopolisiloxane aromatique, D a 4 atomes de carbone.

14. Composition selon l'une quelconque des revendications 1 à 10 où le diaminopolysiloxane aromatique est le bis(m-aminophénoxybutyl)hexadécaméthyloctasiloxane.

15. Méthode de production d'une composition durcissable consistant à mélanger les composants (a) et (b) tels que définis selon l'une quelconque des revendications 1 à 14.

16. Méthode selon la revendication 15, où on prépare d'abord le composant (b) puis (a)(ii) (s'il est présent) et (a)(i) sont ajoutés dans cet ordre et les composants combinés sont chauffés puis mélangés.

17. Composition durcie pouvant être obtenue en durcissant une composition selon l'une quelconque des revendications 1 à 14.

18. Méthode d'obtention d'un article ayant uneTg d'au moins 90°C, consistant à durcir une composition selon l'une quelconque des revendications 1 à 14.
